# EUROPÄISCHE PATENTSCHRIFT

(11) **EP 1 779 027 B1**
(45) Veröffentlichungstag und Bekanntmachung des Hinweises auf die Patenterteilung: **24.10.2007**
(21) Anmeldenummer: 06775846.6
(22) Anmeldetag: 12.08.2006
(51) Int. Cl.: F21L 4/08

(54) **TASCHENLAMPE MIT BATTERIELADEGERÄT**
TORCH COMPRISING A BATTERY CHARGING DEVICE
LAMPE DE POCHE A CHARGEUR DE BATTERIE

(30) Priorität: 30.08.2005 DE 202005013633 U
(43) Veröffentlichungstag der Anmeldung: 02.05.2007
(73) Patentinhaber: Zweibrüder Optoelectronics GmbH, 42699 Solingen (DE)
(72) Erfinder: OPOLKA, Rainer, 42699 Solingen (DE)
(74) Vertreter: Vomberg, Friedhelm
(86) Internationale Anmeldenummer: PCT/DE2006/001416
(87) Internationale Veröffentlichungsnummer: WO 2007/025504

(56) Entgegenhaltungen:
- WO-A-87/03354
- DE-U1- 20 308 466
- DE-U1-2202004 011 72
- DE-U1-5202004 018 68

## Beschreibung

Die Erfindung betrifft eine Taschenlampe mit wiederaufladbaren Akkumulatoren und Kontakten am Gehäuseaußenmantel, über die ein-geschlossener Stromkreis mit einem Batterieladegerät herstellbar ist, das mit einem Adapterstecker zum Anschluss an eine PKW- oder LKW-Steckdose, insbesondere eine Zigarettenanzünderaufnahmebuchse versehen ist.

Tragbare Taschenlampen werden normalerweise nur selten benötigt, stellen jedoch in Ausnahmefällen ein unverzichtbares Hilfsmittel dar, so z. B. im häuslichen Bereich bei einem Stromausfall, auf unbeleuchteten Wegen, zum Beleuchten von Klingelschildern, Hausnummern oder ähnlichem oder im Pannenfall zur Ausleuchtung des Motorraums oder ähnlichem.

Die früher übliche Verwendung von Glühbirnen ließ die Batteriekapazität relativ schnell - erschöpfen, so dass unter Umständen die Restkapazität der Batterien nicht mehr ausreichte, um eine hinreichend große Spannung zu erzeugen.

Eine wesentliche Verbesserung konnte bereits dadurch erreicht werden, dass die Glühbirne durch eine Leuchtdiode ersetzt worden ist. Leuchtdioden benötigen für den Betrieb wesentlich weniger Strom, so dass die Gesamtleuchtdauer pro Batteriesatz entsprechend größer ist.

Hinzu kommt, dass Leuchtdioden im Gegensatz zu Glühbirnen relativ schlag- und stoßfest sind, so dass auch deren Lebensdauer um ein Vielfaches verlängert worden ist. Schließlich sind Leuchtdioden kleiner als Glühbirnen, so dass in Verbindung mit dem geringeren Strombedarf eine deutliche Miniaturisierung der Lampe erzielt werden konnte. Dies ging sogar so weit, dass kleine Lampen einen Durchmesser besaßen, der kleiner als 1 cm war, wobei die Länge der Lampen 5 cm oder weniger betrug. Solche Lampen lassen sich als Schlüsselanhänger mitführen, so dass diese Lampen im Bedarfsfall vorhanden sind.

Weitere Einsparungspotenziale bei Taschenlampen ergeben sich durch die Verwendung von wiederaufladbaren Akkumulatoren, die zwar in der Anschaffung teurer als Einweg-Batterien sind, jedoch mehrfach wiederaufladbar sind.

Für das Wiederaufladen werden nach dem Stand der Technik bekannte Ladegeräte verwendet, die zumeist zum Anschluss an eine Netzsteckdose geeignet sind und Aufnahmefächer für mehrere Batterien, ggf. auch unterschiedliche Formgestaltung haben. Zum Wiederaufladen müssen die Batterien der Taschenlampe entnommen und in das Ladegerät eingesetzt werden, das dann mehrere Stunden am Netz verbleibt, bevor die Batterien wieder verfügbar sind.

DE 20 2004 018 685 U zeigt eine Lampe gemäß dem Oberbegrift des Anspruchs 1.

In der DE 732 364 wird ein Ladegerät nebst Taschenlampe mit eingebautem Akkumulator beschrieben, der für den Netzanschluss geeignet ist. Der Lampenkopf und die nach außen herausgeführten Ladekontakte der stabförmigen Taschenlampe sind so in eine becherförmige Aufnahme des Ladegerätes einführbar, das sie in einer bestimmten Stellung bajonettartig verankert werden können, wobei ein Kontaktschluss zwischen den Kontakten des Ladegerätes und der Taschenlampe herbeigeführt wird.

Die US 3,749,905 beschreibt ein Ladegerät für die Akkumulatoren einer Taschenlampe, das eine Leitungsverbindung besitzt, an deren Ende ein Stecker vorgesehen ist, der in die Aufnahmebuchse eines PKW-Zigarettenanzünders einschiebbar ist. Das Gehäuse des Ladegerätes besitzt Kontaktaufnahmen, die mit entsprechenden Kontakten der Taschenlampe an deren Außengehäuse verbindbar sind, um den Stromkreis zum Wiederaufladen der Batterien zu schließen. Nachteilig ist bei diesem Gerät, dass das Ladegerät entweder an einer Konsole im PKW befestigt werden muss, so dass es optisch wie auch außerhalb der Ladezeit stört. Alternativ kann zwar das Ladegerät im Fußraum oder auf dem Beifahrersitz abgelegt werden, jedoch sind solche beweglichen Teile aufgrund der erhöhten Unfallgefahr beim scharfen Bremsen oder schnellen Kurvenfahrten unerwünscht.

Die DE 36 36 968 C2 beschreibt eine wiederaufladbare Taschenleuchte, die aus einem einen Akkumulator und eine Doppel-Ladeschaltung enthaltenden Zentralteil besteht, das an einem Ende eine Netzsteckeranordnung und am gegenüberliegenden Ende einen Adapterstecker passend für Autosteckdosen, insbesondere Zigarettenanzünderanschlüsse aufweist. Ferner besitzt diese Taschenlampe einen mit dem Zentralteil kuppelbaren, den Adapterstecker übergreifenden Reflektorteil sowie eine die Netzsteckeranordnung abdeckende Steckkappe, bei welcher im Zentralteil eine bei Aufladung des Akkumulators über die Netzsteckeranordnung wirksame Einrichtung zur Trennung der zugänglichen Kontakte des Adaptersteckers angeordnet ist. Erfindungsgemäß soll zur Trennung des Adaptersteckers von der Netzspannung beim Aufladen des Akkumulators über die Netzsteckeranordnung ein über ein Stößel betätigter Schalter vorgesehen sein, der gewährleisten soll, dass dieser bereits zu Beginn des Abziehens der die zugänglichen Kontakte abdeckenden Kappe bzw. des Reflektorteils geöffnet und dadurch die elektrische Verbindung zwischen diesen Kontakten und der Netzspannung unterbrochen wird. Diese Anordnung hat jedoch den Nachteil, sehr voluminös zu sein.

Es ist Aufgabe der vorliegenden Erfindung, die eingangs beschriebene Taschenlampe mit Akkumulatorteil zu einer besser handhabbaren Form und Größe weiter zu entwickeln.

Diese Aufgabe wird dadurch gelöst, dass das Batterieladegerät ein topf- oder hülsenförmiges Gehäuse ist, in das die Taschenlampe so einsteckbar ist, dass Kontakte am Innenteil des Gehäuses an den Kontakten der Gehäuseaußenwand der Taschenlampe anliegen. Vorzugsweise ist das Taschenlampengehäuse im Wesentlichen zylinderförmig und ragt bei eingesteckter Position aus dem hülsenförmigen Gehäuse des Batterieladegerätes nur teilweise heraus.

Die Vorteile der vorbeschriebenen Ausbildung bestehen insbesondere darin, dass das Batterieladegerät permanent im Zigarettenanzünder verbleiben kann, wo es aufgrund seiner hülsenförmigen Ausgestaltung nicht stört, auch dann nicht, wenn die stabförmige Taschenlampe in dieses Ladegerät eingesteckt ist. Soweit das Ladegerät eine Abschaltung des Stroms bei Erreichen der maximalen Ladekapazität der Batterie aufweist, kann die Stabtaschenlampe permanent im Ladegerät und damit im Zigarettenanzünder verbleiben. Vorteilhafterweise ist auf diese Weise die Lampe stets greifbar und stets aufgeladen. Bei der Verwendung von NiCd-Akkumulatoren oder ähnlichen Akkumulatoren, die den sog. Memory-Effekt zeigen, kann u. U. in das Batterieladegerät noch eine Vorrichtung zur periodischen Zwangsentladung der Batterie bis auf einen Wert vorgesehen sein, bei dem die Akkumulatoren teilweise entladen sind, jedoch noch eine genügend große Restspannung für den Betrieb einer Taschenlampe liefern. Insbesondere sollte die Taschenlampe mit einer Leuchtdiode ausgestattet sein, womit der Strombedarf weiter minimiert wird.

Der Zigarettenanzünder eines PKW wird vielfach nicht mehr benutzt, entweder, weil das Rauchen während der Fahrt als störend und verkehrsgefährdend angesehen wird oder weil große Teile der Bevölkerung zu den Nichtrauchern zählen. Der Zigarettenanzünder ist zumeist an leicht zugänglichen Orten im PKW angeordnet, so dass eine dort in dem Ladegerät deponierte Taschenlampe stets griffbereit ist, etwa um nach dem Aussteigen einen dunklen Weg, Türklingelschilder, den Motorraum etc. zu beleuchten. Nach Gebrauch kann die Taschenlampe wieder in die hülsenförmige Ladegerätaufnahme eingesteckt werden.

Eine erfindungsgemäße Taschenlampe zeigt das schematisch dargestellte Ausführungsbeispiel.
Es zeigt eine Taschenlampe 1 mit einem zylinderförmigen Gehäuse 4, das in das topfförmige Gehäuse 6 eines Batterieladegerätes 2 eingesteckt ist. An der Außenseite des Taschenlampen-Gehäuses 4 sind Kontakte 3 angeordnet, die beim Einstecken der Taschenlampe 1 in das topfförmige Gehäuse 6 des Batterieladegerätes 2 in Anlage mit den Kontakten 7 gebracht werden, die an der Innenseite des topfförmigen Gehäuses 6 angeordnet sind. Der Innenraum des topfförmigen Gehäuses 6 ist an die Größe und Form des Gehäusezylinders 4 der Taschenlampe 1 derart angepasst, dass eine reibschlüssige Verbindung ein Herausrutschen der Taschenlampe 1 verhindert. Zudem besteht die Möglichkeit, den seitlichen Kontakt 7 des topfförmigen Gehäuses 6 federnd auszubilden, so dass dieser beim Einstecken der Taschenlampe in eine Ausnehmung des Gehäusezylinders 4 einrastet, in der der Kontakt 3 dann zurückgesetzt angeordnet ist.

Das topfförmige Gehäuse 6 des Batterieladegerätes 2 wiederum ist in die Zigarettenanzünderaufnahmebuchse 8 (gestrichelte Linie) eines Kraftfahrzeuges eingesteckt, wobei die außen liegenden Kontakte 5, 5' des Batterieladegerätes 2 in entsprechende Aufnahmen der Zigarettenanzünderaufnahmebuchse 8 eingreifen. Die Kontakte 5, 5' umfassen einen zentralen Dorn 5 an der Stirnseite des Gehäuses 6 und einen seitlich am Gehäuse 6 angeordneten Federkontakt 5'. Die reibschlüssige Verbindung zwischen der Aufnahmebuchse 8 und dem topfförmigen Gehäuse 6 sowie das Einrasten des Federkontaktes 5' verhindern ein Herausrutschen des Batterieladegerätes.

Das Batterieladegerät 2 übernimmt nicht nur die Funktion eines Adapters, mittels dessen eine Taschenlampe 1 mit relativ kleinem Gehäusedurchmesser in eine durchmessergrößere Aufnahmebuchse 8 eines Zigarettenanzünders einsteckbar ist, sondern gewährleistet durch einen integrierten Transformator (nicht dargestellt) auch, dass die in der Zigarettenanzünderaufnahmebuchse 8 anliegende Spannung in eine entsprechende Ladespannung für die Akkumulatoren (nicht dargestellt) umgewandelt wird. Ist die maximale Ladekapazität der Akkumulatoren erreicht, schaltet sich das Batterieladegerät 2 automatisch ab, so dass es für die Taschenlampe 1 unschädlich ist, über längere Dauer in dem Zigarettenanzünder eingesteckt zu bleiben. Da der Gehäusezylinder 4 der Taschenlampe 1 wenigstens bis zur Hälfte bzw. - je nach Größe der Taschenlampe - darüber hinaus in das topfförmige Gehäuse 6 einführbar ist, geht keine Behinderung von ihr aus. Der vordere Gehäuseabschnitt der Taschenlampe 1 steht gerade so weit vor, dass die Taschenlampe gut greifbar ist, um im Bedarfsfall schnell zur Hand zu sein.

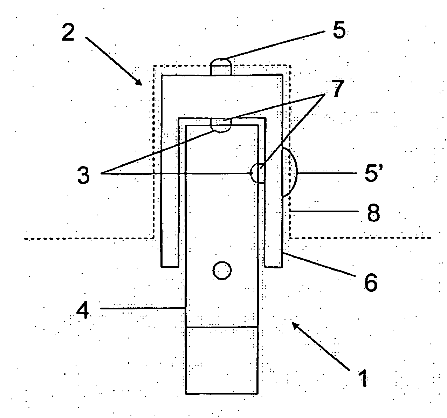

## Patentansprüche

1. Taschenlampe (1) mit wieder aufladbaren Akkumulatoren und Kontakten (3) am Gehäuseaußenmantel (4), über die ein geschlossener Stromkreis mit einem Batterieladegerät (2) herstellbar ist, das mit einem Adapterstecker zum Anschluss an eine PKW- oder LKW-Steckdose, insbesondere eine Zigarettenanzünderaufnahmebuchse (8) versehen ist, wobei das Batterieladegerät (2) ein topf- oder hülsenförmiges Gehäuse (6) ist, in das die Taschenlampe (1) so einsteckbar ist, dass Kontakte (7) am Innenmantel des Gehäuses (6) an den Kontakten (3) der Gehäuseaußenwand (4) der Taschenlampe (1) anliegen,
**dadurch gekennzeichnet, dass**
das topf- oder hülsenförmige Gehäuse (6) des Batterieladegerätes (2) außen liegende Kontakte (5, 5') aufweist, mit denen es in die Aufnahmebuchse (8) eines Zigarettenanzünders so einsteckbar ist, dass die Kontakte (5, 5') in entsprechende Kontaktaufnahmen der Aufnahmebuchse (8) greifen.

2. Taschenlampe (1) nach Anspruch 1, **dadurch gekennzeichnet, dass** das Taschenlampen-Gehäuse (4) im Wesentlichen zylinderförmig ist und bei eingesteckter Position in das hülsenförmige Gehäuse (6) des Batterieladegerätes (2) nur ein Teil herausragt.

3. Taschenlampe (1) nach Anspruch 1 oder 2, **dadurch gekennzeichnet, dass** die Lichtquelle eine Leuchtdiode ist.

## Claims

1. Torch (1) having rechargeable batteries and contacts (3) on the outer housing surface (4), via which a closed circuit with a battery charging device (2) can be produced, said device being provided with an adapter plug for connection to a passenger vehicle or goods vehicle outlet, in particular a cigarette lighter socket (8), whereas the battery charging device (2) is a pot- or hull-shaped housing (6), into which the torch (1) is insertable, so that contacts (7) in the inner surface of the housing (6) apply to contacts (3) of the outer surface (4) of the torch (1),
**characterized in that**,
the pot- or hull-shaped housing (6) of the battery charging device (2) has contacts (5, 5'), lying outside being insertable into the socket (8) of a cigarette lighter, so that the contacts (5, 5') apply to corresponding contacts of the socket (8).

2. Torch (1) according to claim 1, **characterized in that** the torch housing (4) is essentially cylindrical and that only a part of it when pokes out when it is plugged in the hull-shaped housing of the battery charging device in the hull-shaped housing (4) of the battery charging device (2).

3. Torch (1) according to claims 1 or 2, **characterized in that** the light source is a light emitting diode.

## Revendications

1. Lampe de poche (1) comprenant des accumulateurs rechargeables et des contacts (3) sur la surface latérale extérieure du boîtier (4), par l'intermédiaire desquels peut être réalisé un circuit électrique fermé avec un chargeur d'accumulateurs (2) qui est pourvu d'une fiche adaptatrice pour être connecté à une prise de courant d'une voiture ou d'un camion, en particulier à une douille de réception d'allume-cigares (8), ledit chargeur d'accumulateurs (2) étant un boîtier (6) en forme de pot ou de douille dans lequel la lampe de poche (1) peut être introduite de manière à ce que des contacts (7) situés sur la surface latérale intérieure du boîtier (6) s'appliquent contre les contacts (3) de la paroi extérieure du boîtier (4) de la lampe de poche (1),
**caractérisée par le fait que**
ledit boîtier (6) en forme de pot ou de douille du chargeur d'accumulateurs (2) présente des contacts (5, 5') situés à l'extérieur avec lesquels il peut être introduit dans la douille de réception (8) d'un allume-cigares de telle manière que les contacts (5, 5') s'engagent dans des logements de contact correspondants de la douille de réception (8).

2. Lampe de poche (1) selon la revendication 1, **caractérisée par le fait que** le boîtier (4) de la lampe de poche est pour l'essentiel cylindrique et que seulement une partie de celui-ci fait saillie lorsqu'il est introduit dans le boîtier (6) en forme de douille du chargeur d'accumulateurs (2).

3. Lampe de poche (1) selon la revendication 1 ou 2, **caractérisée par le fait que** la source de lumière est une diode émettrice de lumière.
